# EUROPÄISCHE PATENTSCHRIFT

(11) **EP 2 020 347 B1**
(45) Veröffentlichungstag und Bekanntmachung des Hinweises auf die Patenterteilung: **25.01.2012**
(21) Anmeldenummer: 08104106.3
(22) Anmeldetag: 27.05.2008
(51) Int. Cl.: B60S 1/04, B60S 1/16

(54) **Verfahren und Vorrichtung zum Montieren eines Scheibenwischerantriebs**
Device and method for mounting a windscreen wiper drive
Procédé et dispositif de montage d'un entraînement d'essuie-glace

(30) Priorität: 24.07.2007 DE 102007034332
(43) Veröffentlichungstag der Anmeldung: 04.02.2009
(73) Patentinhaber: Robert Bosch GmbH, 70442 Stuttgart (DE)
(72) Erfinder: Knauf, Richard, 67480 Roppenheim (FR)

(56) Entgegenhaltungen:
- EP-A2- 0 292 112
- WO-A1-2005/073040
- US-A- 5 441 227

## Beschreibung

### Stand der Technik

Die Erfindung betrifft ein Verfahren zum Montieren eines Scheibenwischerantriebs gemäß dem Oberbegriff des Anspruchs 1 sowie ein Montageverfahren für einen Scheibenwischerantrieb gemäß dem Oberbegriff des Anspruchs 9.

Bei bekannten Wischeranlagen, insbesondere bei Wischeranlagen mit zwei Wischerlagern, von denen eines über ein Zwischenlager (Wipplager) angetrieben wird, ist die Toleranzkette bedingt durch die große Anzahl an benötigten Bauteilen groß. Hierdurch unterliegen die Wischwinkel, also der Winkel, der von jeweils einem Wischerarm auf der Fahrzeugscheibe überstrichen wird und der den jeweiligen Wischbereich definiert, großen Schwankungen. Dies führt dazu, dass mindestens eine Wischerwelle manuell nachjustiert werden muss. Hierzu ist es bekannt, an einem Lager eines Gestänges des Antriebs einen Kugelzapfen mit einem exzentrischen Schaft anzuordnen, über den sich ein Kurbelradius sowie ein Gestängewinkel einstellen lassen. Zur Fixierung des Kugelzapfens ist dieser in der Regel mittels einer Mutter konterbar. Das manuelle Nachjustieren jedes Scheibenwischerantriebs ist aufwändig, zeit- und damit kostenintensiv.

Alternativ ist es bekannt, zur Einstellung eines vorgesehenen Wischwinkels den Wischermotor in Langlöchern relativ zu einer Motorplatine zu verschieben. Nachteilig bei dieser Vorgehensweise ist, dass durch ein Verschieben des Wischermotors nicht nur das erste, die erste Wischerwelle antreibende Gestänge und damit der erste Wischwinkel verstellt wird, sondern dass gleichzeitig zwangsläufig ein ungewolltes Verstellen des zweiten, die zweite Wischerwelle antreibenden Gestänges erfolgt, wodurch es auch zu einer Verstellung des zweiten Wischwinkels kommt.

Dokument US-A-5441227 offenbart ein Verfahren und eine Vorrichtung gemäß die Oberbegriffe der Ansprüchen 1 und 9.

### Offenbarung der Erfindung

### Technische Aufgabe

Der Erfindung liegt daher die Aufgabe zugrunde, ein optimiertes Verfahren zum Montieren eines Scheibenwischerantriebs vorzuschlagen, mit dem auf einfache Weise zumindest ein Wischwinkel, vorzugsweise beide Wischwinkel optimal eingestellt werden können. Die Aufgabe besteht weiterhin darin, eine entsprechend optimierte Montagevorrichtung, insbesondere zur Durchführung des Montageverfahrens vorzuschlagen.

### Technische Lösung

Hinsichtlich des Verfahrens wird die Aufgabe mit den Merkmalen des Anspruchs 1 und hinsichtlich der Vorrichtung mit den Merkmalen des Anspruchs 9 gelöst. Vorteilhafte Weiterbildungen der Erfindungen sind in den Unteransprüchen angegeben. In den Rahmen der Erfindung fallen auch sämtliche Kombinationen aus zumindest zwei, von in der Beschreibung, in den Ansprüchen und/oder in den Figuren offenbarten Merkmalen. Zur Vermeidung von Wiederholungen, sollen rein verfahrensgemäß offenbarte Merkmale auch als vorrichtungsgemäß offenbart gelten und beanspruchbar sein. Ebenso sollen rein vorrichtungsgemäß offenbarte Merkmale als verfahrensgemäß offenbart gelten und beanspruchbar sein.

Der Erfindung liegt der Gedanke zugrunde, bei der Montage des Scheibenwischerantriebs zunächst das erste und das zweite Lager des ersten Gestänges (Hebelgetriebe, Übersetzungsgestänge) in einem vorläufigen Abstand zueinander zu positionieren, wobei der vorläufige Abstand bevorzugt näherungsweise dem endgültigen Abstand entspricht. Vorzugsweise nach dem Positionieren des ersten und des zweiten Lagers in dem vorläufigen Abstand zueinander oder auch zuvor, wird das erste Gestänge mit seinen Gestängeteilen montiert. Dabei werden unter Gestängeteilen sowohl Gelenkstangen als auch Kurbelplatten verstanden.

Nach der Montage der Gestängeteile des ersten Gestänges erfolgt eine Messung eines vorläufigen ersten Wischwinkels. Auf Basis der Messdaten und unter Berücksichtigung des zu erzielenden vorgegebenen ersten Wischwinkels wird der optimale Abstand zwischen dem ersten und dem zweiten Lager berechnet, der eingestellt werden muss, damit sich in der Folge der erste vorgegebene Wischwinkel ergibt. Bevorzugt wird die Differenz des vorläufigen Abstands berechnet, also die Strecke, um die die Lager relativ zueinander verstellt werden müssen, damit der vorgegebene Wischwinkel resultiert. Die Berechnung des optimalen Abstandes bzw. der Verstellstrecke erfolgt dabei bevorzugt unter Zuhilfenahme trigonometrischer Funktionen und gegebenenfalls unter Berücksichtigung weiterer Messdaten, wie beispielsweise der Länge mindestens eines Gestängeteils und/oder des zu messenden vorläufigen Abstandes zwischen dem ersten und dem zweiten Lager.

Nach Ermitteln des optimalen Abstandes bzw. der Differenz des vorläufigen Abstandes zu dem optimalen Abstand werden die beiden Lager derart positioniert, d.h. relativ zueinander verstellt, dass sie in dem optimalen Abstand zueinander angeordnet sind und in der Folge der Schwenkbereich des ersten Wischerarms optimiert ist, d.h. den Vorgaben entspricht. Dabei ist es wesentlich, dass die Lager derart zueinander verstellt werden, dass durch dieses Verstellen der zweite Wischwinkel nicht beeinflusst wird. Dies kann beispielsweise dadurch realisiert werden, dass es sich bei den beiden relativ zueinander zu verstellenden Lagern um Lager handelt, die zur Abtriebswelle des Scheibenwischerantriebs beabstandet angeordnet sind, also beispielsweise um das erste Wischerlager und ein Zwischenlager. Alternativ ist es denkbar, dass es sich bei einem der Lager um ein Lager der Abtriebswelle handelt, das als zu dem ersten und/oder zweiten Gestänge zugehörig gelten soll und bei dem anderen Lager um ein zu der Abtriebswelle beabstandetes Lager des ersten Gestänges, wobei in diesem Fall darauf zu achten ist, dass nicht das Abtriebswellenlager relativ zu dem zweiten Gestänge, insbesondere zu der zweiten Wischerwelle, verstellt wird, um den zweiten Wischwinkel nicht zu beeinflussen. Dies kann beispielsweise dadurch realisiert werden, dass nur das Wischerlager aktiv verstellt wird, oder dass die Antriebswelle nur zusammen mit einer Motorplatine verstellt wird, mit der das zweite Wischerlager fest verbunden oder fest verbindbar ist. Nachdem der optimale Abstand zwischen den beiden Lagern eingestellt wurde, werden die beiden Lager in dem optimalen Abstand relativ zueinander fixiert. Das nach dem Konzept der Erfindung ausgeführte Verfahren ermöglicht es auf einfache Weise, einen optimalen ersten Wischwinkel zu realisieren, ohne manuell nachjustieren zu müssen, so dass mit Vorteil auf einen Kugelzapfen mit exzentrischem Schaft und gegebenenfalls einer Kontermutter verzichtet werden kann.

Vergleichsweise einfach gestaltet sich die Bestimmung des optimalen Abstandes, wenn das erste und das zweite Lager, deren optimaler Abstand zueinander berechnet wird, bei fertig montiertem Scheibenwischerantrieb ortsfest zueinander angeordnet sind. Alternativ ist es auch denkbar, den optimalen Abstand zwischen einem ortsfesten und einem verschwenkbaren Lager in einer extremen Schwenkposition zu bestimmen, oder den optimalen Abstand zweier verschwenkbarer Lager in einer extremen Auslenkposition zueinander, wobei im letztgenannten Fall die relative Fixierung dieser Lager mit dem optimalen Abstand in mindestens einer extremen Schwenkposition indirekt durch die direkte Fixierung zweier ortsfester Lager zueinander erfolgt.

Von Vorteil ist eine Ausführungsform, bei der das zweite Lager als Wipplager eines Wipp-Gestängeteils ausgebildet ist und vorzugsweise das erste Lager als Lager der ersten Wischerwelle (Wischerlager). Dabei kann das erste Gestängeteil beispielsweise von einer drehfest mit der ersten Wischerwelle verbundenen Kurbelplatte oder von einer die Kurbelplatte gelenkig mit dem Wipp-Gestänge verbundenen Gelenkstange gebildet werden. Für den Fall, dass das erste Gestängeteil von der Kurbelplatte gebildet ist, kann das zweite Gestängeteil von der genannten Gelenkstange gebildet sein. Alternativ kann das zweite Gestängeteil von dem Wipp-Gestänge gebildet werden.

Ebenso ist eine Ausführungsform realisierbar, bei der das zweite Lager als Abtriebswellenlager der Abtriebswelle ausgebildet ist.

Zum Fixieren der beiden Lager in dem berechneten optimalen Abstand relativ zueinander ist vorzugsweise ein Rohrelement vorgesehen. Bevorzugt wird das Rohrelement zu beiden Seiten mit jeweils einer Lagerhalterung fest verbunden, beispielsweise durch Vercrimpen und/oder Vernieten und/oder Verrasten und/oder Verschrauben und/oder Verschweißen. Dabei kann eine Lagerhalterung, beispielsweise als Motorplatine und die andere Lagerhalterung als Wischerlagerhalterung ausgebildet sein.

Von besonderem Vorteil ist eine Verfahrensausführung, bei der nicht bei jedem montierenden Scheibenwischerantrieb ein minimaler und/oder maximaler vorläufiger Wischwinkel gemessen und daraus der optimale Abstand der beiden Lager zueinander ermittelt wird, sondern bei der das Messen und Berechnen lediglich zu Beginn einer Fertigungscharge, beispielsweise nur bei dem ersten oder den ersten zu montierenden Scheibenwischerantrieb(en) erfolgt und dass nachfolgend zu montierende Scheibenwischerantriebe einer Fertigungscharge derart montiert werden, dass der zu Beginn der Fertigungscharge berechnete optimale Abstand zwischen den beiden Lagern eingestellt wird. Diese Vorgehensweise ist möglich, da erkannt wurde, dass in den großen Toleranzbereichen meist systematische Fehler bei der Bauteilfertigung der zur Anordnung kommenden Bauteile, insbesondere der Gussteile, zugrunde liegen.

In Weiterbildung der Erfindung wird mittels des Montageverfahrens nicht nur der erste Wischwinkel, bei dem es sich vorzugsweise um den beifahrerseitigen Wischwinkel handelt, optimiert, sondern auch der zweite Wischwinkel. Bei der Einstellung des zweiten Wischwinkels auf einen vorgegebenen Wert wird bevorzugt in analoger Weise wie bei der Einstellung des ersten Wischwinkels vorgegangen. Die Einstellung eines optimalen Abstandes zwischen zwei Lagern des zweiten Gestänges (Hebelgetriebe, Übersetzungsgestänge) erfolgt dabei ohne hierdurch den ersten Wischwinkel zu beeinflussen.

Dies kann beispielsweise dadurch realisiert werden, dass die Abtriebswelle eine feste Position zu einer Motorplatine einnimmt, und dass, falls die Relativposition zwischen der Abtriebswelle bzw. einem Abtriebswellenlager und einem weiteren Lager des zweiten Gestänges verändert werden soll, die gesamte Motorplatine zusammen mit der Abtriebswelle verstellt wird, ohne die Relativposition zwischen Motorplatine und Abtriebswelle bzw. dem Abtriebswellenlager zu variieren, wobei die Motorplatine bevorzugt als Angriffspunkt für Fixiermittel zum Fixieren eines Lagers des Gestänges relativ zu einem zweiten Lager des Gestänges in den berechneten optimalen Abstand dient.

Die Erfindung führt auch auf eine Montagevorrichtung zur Montage eines Scheibenwischerantriebsgestänges, wobei die Montagevorrichtung erfindungsgemäß ein erstes Haltemittel zum Halten des ersten Lagers und ein zweites Haltemittel zum Halten des zweiten Lagers aufweist, wobei die beiden Haltemittel relativ zueinander verstellbar sind, um den optimalen Abstand zwischen den beiden Lagern einstellen zu können. Die Montagevorrichtung ist auf einfache Weise zum Einstellen des zweiten Wischerwinkels erweiterbar, indem Haltemittel zum Halten zweier Lager des zweiten Gestänges vorgesehen werden, die relativ zueinander verstellbar sind, wobei es möglich ist, dass eines der Lager des ersten Gestänges gleichzeitig ein Lager des zweiten Gestänges, insbesondere ein Abtriebswellenlager, ist.

Bevorzugt ist eine Ausführungsform, bei der den Haltemitteln Verstellmittel zum automatischen Positionieren der Haltemittel in einem vorgegebenen, insbesondere dem optimalen Abstand zugeordnet sind. Von besonderem Vorteil ist weiterhin eine Ausführungsform, bei der die Montagevorrichtung Messmittel zum Messen eines vorläufigen ersten Wischwinkels aufweist. Bevorzugt wird das Messergebnis automatisch an eine vorzugsweise vorzusehende Logikeinheit übermittelt, die auf Basis dieser Daten den optimalen Abstand zwischen den beiden Lagern berechnend ausgebildet ist.

Besonders bevorzugt ist es, wenn die Logikeinheit den berechneten optimalen Abstand an Verstellmittel weiterleitet, deren Steuereinrichtung diesen von der Logikeinheit berechneten optimalen Abstand dann zwischen den Haltemitteln und damit zwischen den Lagern automatisch einstellt.

### Kurze Beschreibung der Zeichnungen

Weitere Vorteile, Merkmale und Einzelheiten der Erfindung ergeben sich aus der nachfolgenden Beschreibung. Bevorzugte Ausführungsbeispiele sowie anhand der Zeichnungen. Diese zeigen in:
- Fig. 1: eine seitliche Ansicht auf einen Scheiben-Wischerantrieb,
- Fig. 2: eine Ansicht auf den Scheibenwischerantrieb gemäß Fig. 1 von oben und
- Fig. 3: eine schematische Darstellung einer Montage-Vorrichtung

### Ausführungsformen der Erfindung

In den Figuren sind gleiche Bauteile und Bauteile mit der gleichen Funktion mit den gleichen Bezugszeichen gekennzeichnet.

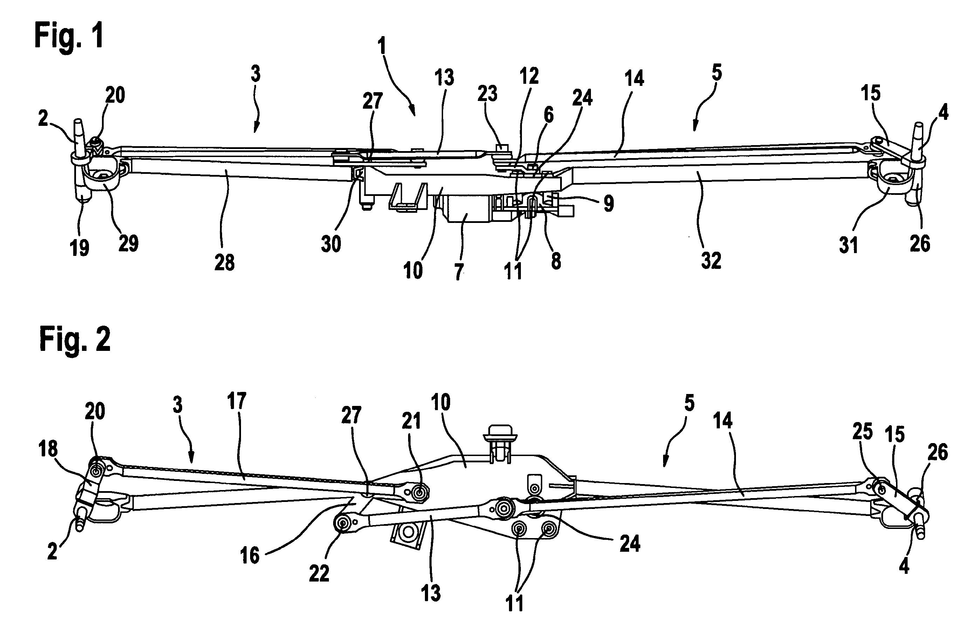

In den Fig. 1 und Fig. 2 ist ein fertig montierter Scheibenwischerantrieb 1 für ein Kraftfahrzeug gezeigt. Der Scheibenwischerantrieb 1 umfasst eine erste Wischerwelle 2, die von einem ersten Gestänge 3 (beifahrerseitiges Gestänge) zum pendelnden Antreiben eines an der Wischerwelle 2 festlegbaren Wischerarms antreibbar ist. An dem der ersten Wischerwelle 2 gegenüberliegenden Ende des Scheibenwischerantriebs 1 ist eine zweite Wischerwelle 4 vorgesehen, die mittels eines zweiten Gestänges 5 (fahrerseitiges Gestänge) zum pendelnden Antrieb eines an der zweiten Wischerwelle 4 festlegbaren Wischerarms antreibbar ist, wobei sowohl der an der ersten Wischerwelle 2 als auch der an der zweiten Wischerwelle 4 anzuordnende Wischerarm jeweils über einen ersten bzw. zweiten Wischwinkel auf einer Windschutzscheibe verschwenkbar sind.

Beide Gestänge 3, 5 laufen an einer gemeinsamen Abtriebswelle 6 zusammen, die die Gestänge antreibt. In dem gezeigten Ausführungsbeispiel wird die Abtriebswelle 6 wiederum von einem Elektromotor 7 über ein Getriebe 8 angetrieben, wobei der Elektromotor 7 zusammen mit dem Getriebe 8 über ein Getriebegehäuse 9 an einer an der Fahrzeugkarosserie festlegbaren Motorplatine 10 mit Fixierschrauben 11 festgelegt ist.

Ein gemeinsames Bauteil des ersten und des zweiten Gestänges 3, 5 ist ein als Kurbelplatte ausgebildetes Gestängeteil 12, welches gelenkig mit einem Verbindungsgestängeteil 13 des ersten Gestänges 3 sowie gelenkig mit einem langen Gestängeteil 14 des zweiten Gestänges 5 verbunden ist. Das Gestängeteil 14 des zweiten Gestänges 5 ist gelenkig mit einer als Kurbelplatte ausgebildetes Gestängeteil 15 verbunden, welches wiederum drehfest mit der zweiten Wischerwelle 4 verbunden ist. Das Verbindungsgestängeteil 13 ist an einem winklig ausgeformten Wipp-Gestängeteil 16 angelenkt, welches wiederum verschwenkbar an der Motorplatine 10 angelenkt ist. Das Wipp-Gestängeteil 16 ist an dem den Verbindungsgestängeteil 13 abgewandten Ende gelenkig mit einem langen Gestängeteil 17 des ersten Gestänges 3 verbunden, welches wiederum gelenkig mit einem als Kurbelplatte ausbildeten Gestängeteil 18 verbunden ist, welche drehfest mit der ersten Wischerwelle 2 verbunden ist. Zusammenfassend umfasst das erste Gestänge 3 somit insgesamt fünf Gestängeteile, nämlich das als Kurbelplatte ausgebildete Gestängeteil 18, das lange Gestängeteil 17, das Wipp-Gestängeteil 16, das Verbindungsgestängeteil 13 sowie das drehfest mit der Abtriebswelle 6 verbundene als Kurbelplatte ausgebildete Gestängeteil 12. Das als Kurbelplatte ausgebildete Gestängeteil 12 ist dabei gleichzeitig ein Gestängeteil des zweiten Gestänges 5, welches weiterhin als Gestängeteile das lange Gestängeteil 14 und das als Kurbelplatte ausgebildete Gestängeteil 15 umfasst. Das erste Gestänge 3 umfasst weiterhin ein Lager 19 (Wischerlager) für die erste Wischerwelle 2, ein weiteres Lager 20 zum gelenkigen Miteinanderverbinden des als Kurbelplatte ausgebildeten Gestängeteils 18 und des langen Gestängeteils 17, ein weiteres Lager 27 (Zwischenlager) zum Lagern des Wipp-Gestängeteils 16 an der Motorplatine 10, ein verschwenkbares Lager 21 zum gelenkigen Miteinanderverbinden des langen Gestängeteils 17 und des Wipp-Gestängeteils 16, ein Lager 22 zum gelenkigen Miteinanderverbinden des Verbindungsgestängeteils 13 mit dem Wipp-Gestängeteil 16, ein Lager 23 zum gelenkigen Verbinden des als Kurbelplatte ausgebildeten Gestängeteils 12 mit dem Verbindungsgestängeteil 13 sowie ein Lager 24 für die Abtriebswelle 6. Das Lager 24 für die Abtriebswelle 6 und das Lager 23 zur Anbindung des langen Gestängeteils 14 an dem als Kurbelplatte ausgebildeten Gestängeteil 12 sind beiden Gestängen 3, 5 gemeinsam. Zusätzlich umfasst das zweite Gestänge 5 ein Lager 25 zwischen dem langen Gestängeteil 14 und der Kurbelplatte 15 sowie ein Lager 26 (Wischerlager) für die zweite Wischerwelle 4.

Bei der Montage des Scheibenwischerantriebs 1 werden zumindest zwei der Lager 19, 20, 21, 22, 23, 24, 27 des ersten Gestänges 3, vorzugsweise sämtliche Lager 19, 20, 21, 22, 23, 24, 27 in (jeweils) einem vorläufigen Abstand zueinander positioniert. Vorzugsweise handelt es sich dabei um die beiden ortsfesten Lager 19, 27, von denen beispielsweise das Lager 19 der ersten Wischerwelle 2, das erste Lager im Sinne der Erfindung und das Lager 27 zur Lagerung des Wipp-Gestängeteils 16 das zweite Lager im Sinne der Erfindung bilden. Daraufhin wird ein sich bei Betrieb des Elektromotors 7 ergebender vorläufiger Wischwinkel (Verdrehwinkel der ersten Wischerwelle 2) gemessen. Auf Basis dieses Messergebnisses wird der optimale Abstand zwischen den Lagern 19, 27 zur Realisierung des vorgegebenen Wischwinkels berechnet.

Nach Bestimmen (Berechnen) des optimalen Abstandes zwischen den beiden Lagern, in diesem Beispiel also des Abstandes zwischen dem Lager 19 und dem Lager 27, und der Berechnung der Differenz zwischen dem gemessenen vorläufigen Abstand und dem optimalen Abstand, werden die beiden Lager 19, 27 derart positioniert, d.h. um die berechnete Differenz relativ zueinander verstellt, dass der optimale Abstand zwischen den Lagern 19, 27 resultiert, woraufhin die beiden Lager 19, 27 relativ zueinander lagefixiert werden. In dem gezeigten Ausführungsbeispiel wird hierzu, nach Einstellen des optimalen Abstandes zwischen den Lagern 19, 27, ein Rohr 28 an beiden Endseiten mit jeweils einer Lagerhalterung 29, 30 bzw. entsprechenden Fortsätzen vercrimpt. In dem gezeigten Ausführungsbeispiel wird die Lagerhalterung 30 von der Motorplatine 10 gebildet.

Zur Einstellung des zweiten Wischwinkels kann analog vorgegangen werden, wobei wenn, beispielsweise ein optimaler Abstand zwischen dem Lager 24 der Abtriebswelle 6 und dem Lager 26 der zweiten Wischerwelle 4 eingestellt werden soll, darauf zu achten ist, dass nicht die Abtriebswelle 6 relativ zu der Motorplatine 10 verstellt wird, sondern wenn die Abtriebswelle 6 überhaupt aktiv verstellt werden soll, diese nur zusammen mit der Motorplatine 10 verstellt wird, um eine Beeinflussung des ersten Wischwinkels zu vermeiden. Aus den Fig. 1 und Fig. 2 ist zu erkennen, dass eine Lagerhalterung 31 mittels eines weiteren Rohres 32 mit der Motorplatine 10 vercrimpt ist, die, da sie immer ortsfest relativ zu der Abtriebswelle 6 ist, als Lagerhalterung für das Lager der Abtriebswelle 6 zu betrachten ist.

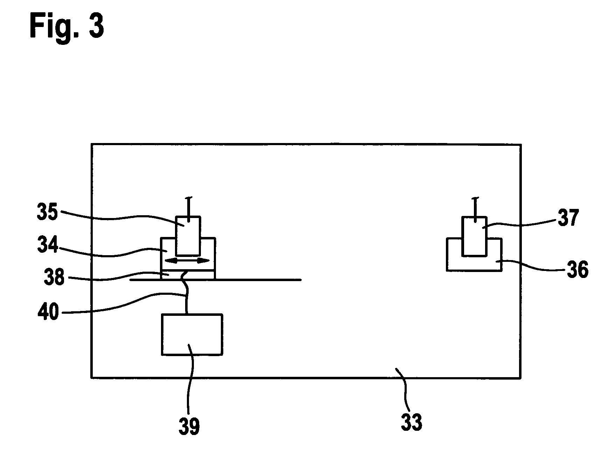

In Fig. 3 ist stark schematisiert eine Montagevorrichtung 33 für einen in den Fig. 1 und Fig. 2 gezeigten Scheibenwischerantrieb 1 gezeigt. Die Montagevorrichtung 10 umfasst erste Haltemittel 34 zum Halten und Positionieren eines ersten Lagers 35 und zweite Haltemittel 36 zum Halten und Positionieren eines zweiten Lagers 37, ggf. können weitere Haltemittel für die anderen Lager vorgesehen werden. Dem ersten Haltemittel 34 sind Verstellmittel 38 mit einer nicht gezeigten Steuereinheit zugeordnet, wobei die Verstellmittel 38 als Verstellschlitten ausgebildet sind. Eine Logikeinheit 39 ist über ein Datenkabel 40 signalleitend mit den Verstellmitteln 38 verbunden, wodurch ein von der Logikeinheit 39 berechneter optimaler Abstand zwischen den Lagern 35, 37 automatisch mittels der Verstellmittel 38 einstellbar ist.

Es ist denkbar, die gezeigte Montagevorrichtung 33 mit nicht gezeigten Messmitteln zum Messen des vorläufigen ersten Wischwinkels und/oder zum Messen des vorläufigen Abstandes zwischen den Lagern 35, 36 auszustatten. Alternativ wird der vorläufige Wischwinkel und/oder der vorläufige Lagerabstand manuell gemessen und die Messdaten entweder händisch in die Logikeinheit 39 eingepflegt oder über eine Signalverbindung, beispielsweise eine Funkverbindung zwischen den Messmitteln und der Logikeinheit 39, an die Logikeinheit 39 übermittelt, so dass die Logikeinheit 39 hieraus den optimalen Abstand zwischen den Lagern 35, 37 berechnen und an die Steuereinheit zum automatischen Einstellen des optimalen Abstandes zwischen den Lagern 35, 37 weiterleiten kann.

## Patentansprüche

1. Verfahren zum Montieren eines Scheibenwischerantriebs (1) mit einer ersten Wischerwelle (2) zum pendelnden Antrieb eines ersten Wischerarms über einen ersten vorgegebenen Wischwinkel und mit einer zweiten Wischerwelle (4) zum pendelnden Antrieb eines zweiten Wischerarms über einen zweiten vorgegebenen Wischwinkel, wobei die erste Wischerwelle (2) über ein erstes Gestänge (3) mit einer Abtriebswelle (6) und die zweite Wischerwelle (4) über ein zweites Gestänge (5) mit der Abtriebswelle (6) verbunden ist, und wobei das erste Gestänge (3) ein erstes Lager (35) und mindestens ein zweites Lager (37), aufweist,
**gekennzeichnet durch**,
- vorläufiges Positionieren des ersten und des zweiten Lagers (35, 37) in einem vorläufigen Abstand relativ zueinander;
- Montieren des ersten Gestänges (3);
- Messen eines ersten vorläufigen Wischwinkels;
- Berechnen des optimalen Abstandes zwischen dem ersten und dem zweiten Lager, bei dem der erste vorgegebene Wischwinkel realisiert wird, auf Basis des gemessenen vorläufigen Wischwinkels;
- Positionieren des ersten und des zweiten Lagers (35, 37) in dem berechneten optimalen Abstand zueinander, ohne dass **dadurch** der zweite Wischwinkel verändert wird;
- Fixieren des ersten und des zweiten Lagers (35, 37) in dem berechneten optimalen Abstand relativ zueinander.

2. Verfahren nach Anspruch 1,
**dadurch gekennzeichnet,**
**dass** das erste und das zweite Lager (35, 37) ortsfest angeordnet werden.

3. Verfahren nach einem der Ansprüche 1 oder 2,
**dadurch gekennzeichnet,**
**dass** das zweite Lager (37) als Wipplager ausgebildet wird.

4. Verfahren nach einem der Ansprüche 1 oder 2,
**dadurch gekennzeichnet,**
**dass** das zweite Lager (35) als Abtriebswellenlager der Abtriebswelle (6) ausgebildet wird.

5. Verfahren nach einem der vorhergehenden Ansprüche,
**dadurch gekennzeichnet**,
das erste und das zweite Lager (35, 37) mittels eines Rohres (28) relativ zueinander lagefixiert werden.

6. Verfahren nach Anspruch 5,
**dadurch gekennzeichnet,**
**dass** das Rohr (28) zu beiden Endseiten mit einer ersten und einer zweiten Lagerhalterung (29, 30) vercrimpt und/oder vernietet und/oder verrastet und/oder verschraubt und/oder verschweisst wird.

7. Verfahren nach einem der vorhergehenden Ansprüche,
**dadurch gekennzeichnet,**
**dass** das Messen des vorläufigen Wischwinkels und das Berechnen des optimalen Abstandes zwischen dem ersten und dem zweiten Lager (35, 37) zu Beginn einer Fertigungscharge erfolgt, und dass danach eine Vielzahl von Scheibenwischerantrieben (1) mit dem zu Beginn der Fertigungscharge berechneten optimalen Abstand zwischen dem ersten und dem zweiten Lager montiert werden.

8. Verfahren nach einem der vorhergehenden Ansprüche,
**dadurch gekennzeichnet,**
**dass** das zweite Gestänge (5) ein drittes und mindestens ein viertes Lager aufweist, und dass das dritte und das vierte Lager in einem vorläufigen Abstand zueinander positioniert werden, und das zweite Gestänge (5) montiert wird und ein vorläufiger zweiter Wischwinkel gemessen wird, auf Basis dessen der optimalen Abstand zwischen dem dritten und dem vierten Lager berechnet wird, bei dem der zweite vorgegebene Wischwinkel realisiert wird, woraufhin das dritte und das vierte Lager in dem berechneten optimalen Abstand zueinander positioniert werden, derart, dass durch das Positionieren der erste Wischwinkel nicht verändert wird, woraufhin das dritte und das vierte Lager relativ zueinander lagefixiert werden.

9. Montagevorrichtung zur Montage eines Scheibenwischerantriebs (1), insbesondere zur Durchführung eines Verfahrens nach einem der vorhergehenden Ansprüche, mit einer ersten Wischerwelle (2) zum pendelnden Antrieb eines ersten Wischerarms über einen ersten vorgegebenen Wischwinkel und mit einer zweiten Wischerwelle (4) zum pendelnden Antrieb einer zweiten Wischerwelle über einen zweiten vorgegebenen Wischwinkel, wobei die erste Wischerwelle (2) über ein erstes Gestänge (3) mit einer Abtriebswelle (6) und die zweite Wischerwelle (4) über ein zweites Gestänge (5) mit der Abtriebswelle (6) verbunden ist, und wobei das erste Gestänge (3) ein erstes Lager (35), und mindestens ein zweites Lager (37) aufweist, wobei die Montageeinrichtung (1) erste Haltemittel (34) zum Halten des ersten Lagers (35) und zweite Haltemittel (36) zum Halten des zweiten Lagers (37) aufweist,
**dadurch gekennzeichnet,**
**dass** die ersten und die zweiten Haltemittel (34,36) relativ zueinander verstellbar sind.

10. Montagevorrichtung nach Anspruch 9,
**dadurch gekennzeichnet,**
**dass** Verstellmittel (38) zum automatischen Positionieren der ersten und der zweiten Haltemittel relativ zueinander in einem vorgegebenen, insbesondere dem optimalen, Abstand vorgesehen sind.

11. Montagevorrichtung nach einem der Ansprüche 9 oder 10,
**dadurch gekennzeichnet,**
**dass** die Montagevorrichtung (1) Messmittel zum Messen eines vorläufigen Wischwinkels aufweist.

12. Montagevorrichtung nach einem der Ansprüche 9 bis 11,
**dadurch gekennzeichnet,**
**dass** die Montagevorrichtung (1) eine Logikeinheit (39) zum Berechnen des optimalen Abstandes zwischen dem ersten und dem zweiten Lager (35, 37) aufweist.

13. Montagevorrichtung nach Anspruch 12,
**dadurch gekennzeichnet,**
**dass** die Logikeinheit (34) signalleitend mit den Verstellmitteln (38) verbunden ist und dass die Verstellmittel (38) die Haltemittel (34, 36) in dem von der Logikeinheit (39) berechneten optimalen Abstand relativ zueinander positionieren.

## Claims

1. Method for mounting a windscreen wiper drive (1) with a first wiper shaft (2) for the oscillating drive of a first wiper arm over a first predefined wiping angle, and with a second wiper shaft (4) for the oscillating drive of a second wiper arm over a second predefined wiping angle, wherein the first wiper shaft (2) is connected to an output shaft (6) via a first linkage (3), and the second wiper shaft (4) is connected to the output shaft (6) via a second linkage (5), and wherein the first linkage (3) has a first bearing (35) and at least one second bearing (37), **characterized by**
- provisionally positioning the first and the second bearing (35, 37) at a provisional distance relative to each other;
- mounting the first linkage (3);
- measuring a first provisional wiping angle;
- calculating the optimum distance between the first and the second bearing, at which the first predefined wiping angle is realized, on the basis of the measured provisional wiping angle;
- positioning the first and the second bearing (35, 37) at the calculated optimum distance from each other without the second wiping angle being changed as a result;
- fixing the first and the second bearing (35, 37) at the calculated optimum distance relative to each other.

2. Method according to Claim 1, **characterized in that** the first and the second bearing (35, 37) are arranged in a fixed position.

3. Method according to either of Claims 1 and 2, **characterized in that** the second bearing (37) is designed as a rocker-type bearing.

4. Method according to either of Claims 1 and 2, **characterized in that** the second bearing (37) is designed as an output shaft bearing of the output shaft (6).

5. Method according to one of the preceding claims, **characterized in that** the first and the second bearing (35, 37) are fixed in position relative to each other by means of a tube (28).

6. Method according to Claim 5, **characterized in that** the tube (28) is crimped and/or riveted and/or latched and/or screwed and/or welded on both end sides to a first and a second bearing holder (29, 30).

7. Method according to one of the preceding claims, **characterized in that** the provisional wiping angle is measured and the optimum distance between the first and the second bearing (35, 37) calculated at the beginning of a manufacturing batch, and **in that** a multiplicity of windscreen wiper drives (1) are subsequently mounted with the optimum distance between the first and the second bearing calculated at the beginning of the manufacturing batch.

8. Method according to one of the preceding claims, **characterized in that** the second linkage (5) has a third bearing and at least one fourth bearing, and **in that** the third and the fourth bearing are positioned at a provisional distance from each other, and the second linkage (5) is mounted and a provisional second wiping angle is measured, on the basis of which the optimum distance between the third and the fourth bearing, at which the second predefined wiping angle is realized, is calculated, whereupon the third and the fourth bearing are positioned at the calculated optimum distance with respect to each other such that the first wiping angle is not changed by the positioning, whereupon the third and the fourth bearing are fixed in position relative to each other.

9. Mounting device for mounting a windscreen wiper drive (1), in particular for carrying out a method according to one of the preceding claims, with a first wiper shaft (2) for the oscillating drive of a first wiper arm over a first predefined wiping angle, and with a second wiper shaft (4) for the oscillating drive of a second wiper arm over a second predefined wiping angle, wherein the first wiper shaft (2) is connected to an output shaft (6) via a first linkage (3), and the second wiper shaft (4) is connected to the output shaft (6) via a second linkage (5), and wherein the first linkage (3) has a first bearing (35) and at least one second bearing (37), wherein the mounting device (1) has first holding means (34) for holding the first bearing (35) and second holding means (36) for holding the second bearing (37), **characterized in that** the first and the second holding means (34, 36) can be adjusted relative to each other.

10. Mounting device according to Claim 9, **characterized in that** adjusting means (38) for automatically positioning the first and the second holding means relative to each other are provided at a predefined, in particular the optimum, distance.

11. Mounting device according to either of Claims 9 and 10, **characterized in that** the mounting device (1) has measuring means for measuring a provisional wiping angle.

12. Mounting device according to one of Claims 9 to 11, **characterized in that** the mounting device (1) has a logic unit (39) for calculating the optimum distance between the first and the second bearing (35, 37).

13. Mounting device according to Claim 12, **characterized in that** the logic unit (39) is connected in a signal-conducting manner to the adjustment means (38), and **in that** the adjustment means (38) position the holding means (34, 36) at the optimum distance relative to each other, which distance is calculated by the logic unit (39).

## Revendications

1. Procédé de montage d'un entraînement d'essuie-glace (1), comprenant un premier arbre d'essuie-glace (2) pour l'entraînement suivant un mouvement pendulaire d'un premier bras d'essuie-glace selon un premier angle de balayage prédéfini, et comprenant un deuxième arbre d'essuie-glace (4) pour l'entraînement suivant un mouvement pendulaire d'un deuxième bras d'essuie-glace selon un deuxième angle de balayage prédéfini, le premier arbre d'essuie-glace (2) étant relié à un arbre de sortie (6) par l'intermédiaire d'une première tringlerie (3) et le deuxième arbre d'essuie-glace (4) étant relié à l'arbre de sortie (6) par l'intermédiaire d'une deuxième tringlerie (5), et la première tringlerie (3) comportant un premier palier (35) et au moins un deuxième palier (37),
**caractérisé par**
- le positionnement préliminaire du premier et du deuxième palier (35, 37) à une distance préliminaire l'un par rapport à l'autre ;
- le montage de la première tringlerie (3) ;
- la mesure d'un premier angle de balayage préliminaire ;
- le calcul de la distance optimale entre le premier et le deuxième palier, pour laquelle le premier angle de balayage prédéfini est obtenu, sur la base de l'angle de balayage préliminaire mesuré ;
- le positionnement du premier et du deuxième palier (35, 37) à la distance l'un par rapport à l'autre optimale calculée, sans que le deuxième angle de balayage ne soit modifié en conséquence ;
- la fixation du premier et du deuxième palier (35, 37) à la distance l'un par rapport à l'autre optimale calculée.

2. Procédé selon la revendication 1,
**caractérisé en ce que**
le premier et le deuxième palier (35, 37) sont disposés de manière fixe.

3. Procédé selon la revendication 1 ou 2,
**caractérisé en ce que**
le deuxième palier (37) est réalisé sous forme de palier à bascule.

4. Procédé selon la revendication 1 ou 2,
**caractérisé en ce que**
le deuxième palier (37) est réalisé sous forme de palier d'arbre de sortie de l'arbre de sortie (6).

5. Procédé selon l'une quelconque des revendications précédentes,
**caractérisé en ce que**
le premier et le deuxième palier (35, 37) sont fixés en position l'un par rapport à l'autre au moyen d'un tube (28).

6. Procédé selon la revendication 5,
**caractérisé en ce que**
le tube (28), au niveau des deux côtés d'extrémité, est serti sur et/ou riveté à et/ou encliqueté sur et/ou vissé sur et/ou soudé à un premier et un deuxième support de palier (29, 30).

7. Procédé selon l'une quelconque des revendications précédentes,
**caractérisé en ce que**
la mesure de l'angle de balayage préliminaire et le calcul de la distance optimale entre le premier et le deuxième palier (35, 37) s'effectuent au début d'un lot de fabrication, et **en ce qu'**ensuite une pluralité d'entraînements d'essuie-glace (1) sont montés avec la distance optimale entre le premier et le deuxième palier calculée au début du lot de fabrication.

8. Procédé selon l'une quelconque des revendications précédentes,
**caractérisé en ce que**
la deuxième tringlerie (5) comporte un troisième et au moins un quatrième palier, et **en ce que** le troisième et le quatrième palier sont positionnés l'un par rapport à l'autre à une distance préliminaire, et la deuxième tringlerie (5) est montée et un deuxième angle de balayage préliminaire est mesuré, sur la base duquel la distance optimale entre le troisième et le quatrième palier, pour laquelle le deuxième angle de balayage prédéfini est obtenu, est calculée, après quoi le troisième et le quatrième palier sont positionnés l'un par rapport à l'autre à la distance optimale calculée, de telle sorte que le premier angle de balayage ne soit pas modifié par le positionnement, après quoi le troisième et le quatrième palier sont fixés en position l'un par rapport à l'autre.

9. Dispositif de montage pour le montage d'un entraînement d'essuie-glace (1), en particulier pour mettre en oeuvre un procédé selon l'une quelconque des revendications précédentes, comprenant un premier arbre d'essuie-glace (2) pour l'entraînement suivant un mouvement pendulaire d'un premier bras d'essuie-glace selon un premier angle de balayage prédéfini, et comprenant un deuxième arbre d'essuie-glace (4) pour l'entraînement suivant un mouvement pendulaire d'un deuxième bras d'essuie-glace selon un deuxième angle de balayage prédéfini, le premier arbre d'essuie-glace (2) étant relié à un arbre de sortie (6) par l'intermédiaire d'une première tringlerie (3) et le deuxième arbre d'essuie-glace (4) étant relié à l'arbre de sortie (6) par l'intermédiaire d'une deuxième tringlerie (5), et la première tringlerie (3) comportant un premier palier (35) et au moins un deuxième palier (37), le dispositif de montage (1) comportant des premiers moyens de maintien (34) pour maintenir le premier palier (35) et des deuxièmes moyens de maintien (36) pour maintenir le deuxième palier (37),
**caractérisé en ce que**
les premiers et les deuxièmes moyens de maintien (34, 36) peuvent être déplacés les uns par rapport aux autres.

10. Dispositif de montage selon la revendication 9,
**caractérisé en ce que**
des moyens de déplacement (38) sont prévus pour le positionnement automatique des premiers et des deuxièmes moyens de maintien les uns par rapport aux autres à une distance prédéfinie, en particulier à la distance optimale.

11. Dispositif de montage selon la revendication 9 ou 10,
**caractérisé en ce que**
le dispositif de montage (1) comporte des moyens de mesure pour mesurer un angle de balayage préliminaire.

12. Dispositif de montage selon l'une quelconque des revendications 9 à 11,
**caractérisé en ce que**
le dispositif de montage (1) comporte une unité logique (39) pour calculer la distance optimale entre le premier et le deuxième palier (35, 37).

13. Dispositif de montage selon la revendication 12,
**caractérisé en ce que**
l'unité logique (39) est reliée aux moyens de déplacement (38) de manière à transmettre des signaux, et **en ce que** les moyens de déplacement (38) positionnent les moyens de maintien (34, 36) les uns par rapport aux autres à la distance optimale calculée par l'unité logique (39).
